# FASCICULE DE BREVET EUROPEEN

(11) **EP 2 724 114 B1**
(45) Date de publication et mention de la délivrance du brevet: **19.08.2015**
(21) Numéro de dépôt: 12744026.1
(22) Date de dépôt: 21.06.2012
(51) Int. Cl.: F41H 7/02, F41H 5/22

(54) **VÉHICULE BLINDÉ COMPORTANT UNE RAMPE D'ACCÈS BASCULANTE**
GEPANZERTES FAHRZEUG MIT SCHWENKBARER ZUGANGSRAMPE
ARMOURED VEHICLE WITH PIVOTING ACCESS RAMP

(30) Priorité: 22.06.2011 FR 1101950
(43) Date de publication de la demande: 30.04.2014
(73) Titulaire: NEXTER Systems, 42328 Roanne Cedex (FR)
(72) Inventeur: JACQUEMONT, Jacky, F-18023 Burges Cedex (FR); SERPEAULT, Jérôme, F-18023 Bourges Cedex (FR)
(74) Mandataire: Chaillot, Geneviève
(86) Numéro de dépôt international: PCT/FR2012/051424
(87) Numéro de publication internationale: WO 2012/175885

(56) Documents cités:
- EP-A1- 2 375 214
- EP-A2- 0 825 411
- EP-A2- 0 874 211
- DE-U1- 8 716 183
- FR-A- 718 231

## Description

Le domaine technique de l'invention est celui des véhicules blindés et en particulier des véhicules blindés dont la caisse comporte un panneau basculant formant une rampe d'accès à l'habitacle qui est délimité par la caisse.

Il est connu (par exemple du brevet EP874211) de réaliser de tels véhicules comportant une rampe d'accès arrière. La rampe est articulée sur la caisse et elle obture complètement une ouverture de la caisse.

La rampe une fois abaissée constitue en effet un plan incliné facilitant une entrée et une sortie rapide du véhicule par des soldats.

Aujourd'hui il est nécessaire de définir des véhicules blindés dont le plancher est situé à une distance relativement importante du sol (de l'ordre de 1,2 m). En effet une telle distance est nécessaire pour limiter les effets du souffle des mines ou des engins explosifs improvisés et aussi pour permettre la mise en place de protections balistiques du plancher.

Ceci conduit donc à éloigner du sol l'articulation du panneau basculant. Une telle disposition a cependant pour conséquence de donner à la rampe formée par le panneau ouvert une pente qui est excessive pour les soldats.

L'invention a pour but de proposer une architecture de caisse de véhicule blindé comportant un panneau basculant, caisse de véhicule dans laquelle le plancher est à une distance importante du sol mais la rampe conserve cependant une pente réduite. Cette caisse assure un maintien d'un bon niveau de protection contre les mines à effet de souffle et les engins explosifs improvisés.

Ainsi l'invention a pour objet un véhicule blindé comportant une caisse formant habitacle qui est obturée à sa partie arrière par un panneau basculant constituant un ouvrant qui est articulé par rapport à la caisse sur un pivot et qui forme en position ouverte une rampe d'accès à l'habitacle, véhicule blindé caractérisé en ce que la caisse comporte une plaque inférieure qui comporte une partie qui s'incline progressivement vers l'arrière de la caisse, le pivot de l'ouvrant étant situé en dessous de cette plaque inférieure et les moyens de manoeuvre de l'ouvrant se logeant latéralement au dessus de la plaque inférieure, la caisse comportant par ailleurs des parois latérales sur lesquelles la plaque inférieure est en appui balistique, et en ce que, en position ouverte avec le véhicule sur un sol horizontal plan, l'ouvrant a une première extrémité qui est séparée du sol par un premier seuil et une deuxième extrémité qui est séparée de la plaque inférieure par un deuxième seuil.

Les parois latérales sur lesquelles la plaque inférieure est en appui balistique seront avantageusement des tôles pliées formant des déports coiffant des roues arrières du véhicule.

Les moyens de manoeuvre de l'ouvrant pourront être logés dans des compartiments de l'habitacle situés de part et d'autre de la plaque inférieure.

L'invention sera mieux comprise à la lecture de la description qui va suivre d'un mode particulier de réalisation, description faite en référence aux dessins annexés et sur lesquels :
- la Figure 1 montre en vue latérale schématique un véhicule blindé selon un mode de réalisation de l'invention ;
- la Figure 2 est une vue arrière de ce véhicule blindé panneau basculant fermé ;
- la Figure 3 est une vue partielle en perspective arrière de ce véhicule blindé panneau basculant ouvert ;
- la Figure 4a est une vue en coupe de l'arrière du véhicule, panneau basculant fermé ;
- la Figure 4b est une vue en coupe de l'arrière du véhicule, panneau basculant ouvert ; et
- les Figures 5a et 5b sont des vues de détails des appuis balistiques de la plaque inférieure sur les différentes parois de la caisse.

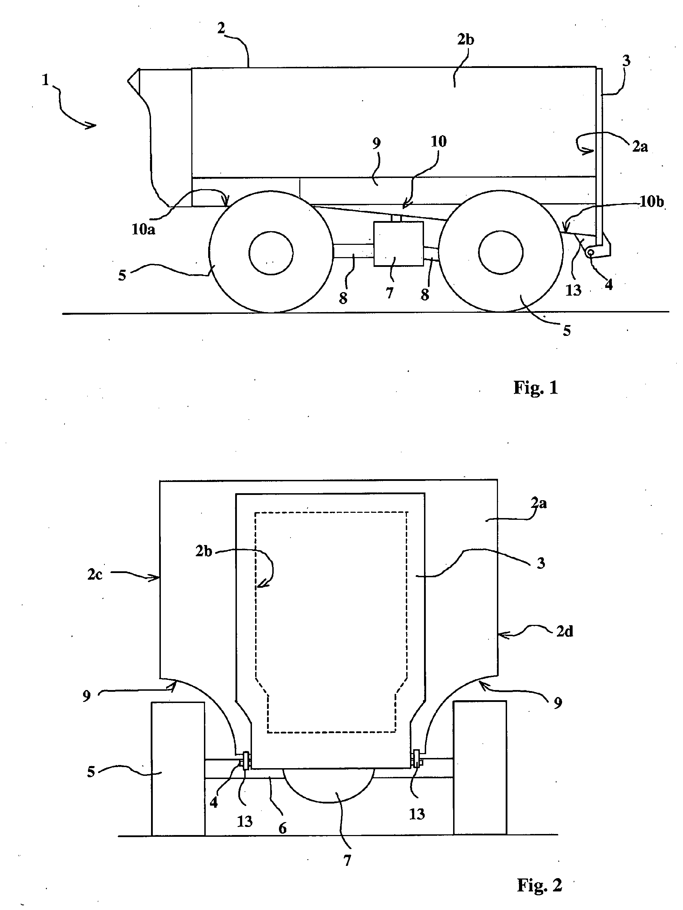

En se reportant aux Figures 1 à 3, un véhicule blindé 1 selon l'invention comporte une caisse 2 formant habitacle pour des soldats (non représentés). Cette caisse est formée de plusieurs parois mécanosoudées et elle comporte au niveau d'une paroi arrière 2a une ouverture 2b qui est obturée par un panneau 3 basculant constituant un ouvrant.

Ce panneau 3 est articulé par rapport à la caisse 2 sur un pivot horizontal 4.

Le véhicule 1 est ici un véhicule à roues 5. Les roues sont reliées deux à deux par des essieux 6 qui sont eux-mêmes raccordés à des boîtiers de transmission 7 reliés à une motorisation (non représentée) par des arbres d'entraînement 8.

La caisse 2 comporte au niveau de sa partie inférieure des parois latérales sous la forme de tôles à blindage pliées 9. Ces parois pliées prolongent des parois verticales 2c et 2d de la caisse 2 et forment des déports concaves coiffant les roues 5 du véhicule. Une telle disposition des déports de roues est décrite par le brevet FR2932557.

Conformément à l'invention la caisse 2 comporte une plaque inférieure 10 formant plancher comportant une partie horizontale 10a et une partie 10b qui s'incline progressivement vers l'arrière de la caisse 2.

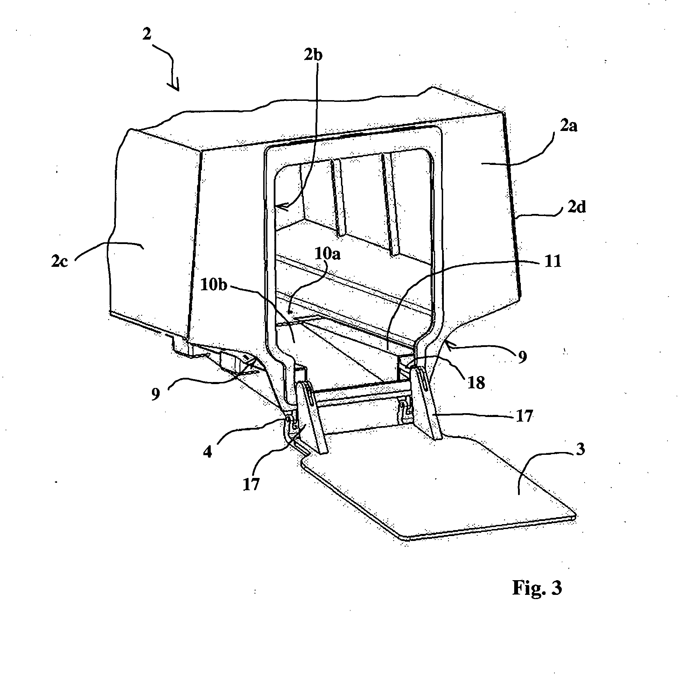

Comme on le voit plus clairement sur la Figure 3 qui montre le véhicule en perspective arrière (roues retirées) et panneau 3 ouvert, la plaque inférieure 10 a une partie 10b qui forme une pente à l'arrière de la caisse 2 du véhicule.

On remarque sur les Figures que le pivot 4 de l'ouvrant 3 est situé en dessous de la plaque inférieure 10. Le pivot 4 est formé par des languettes percées 13, disposées de part et d'autre de l'ouvrant 3 (Figure 2) et traversées chacune par un axe 14 solidaire de l'ouvrant 3.

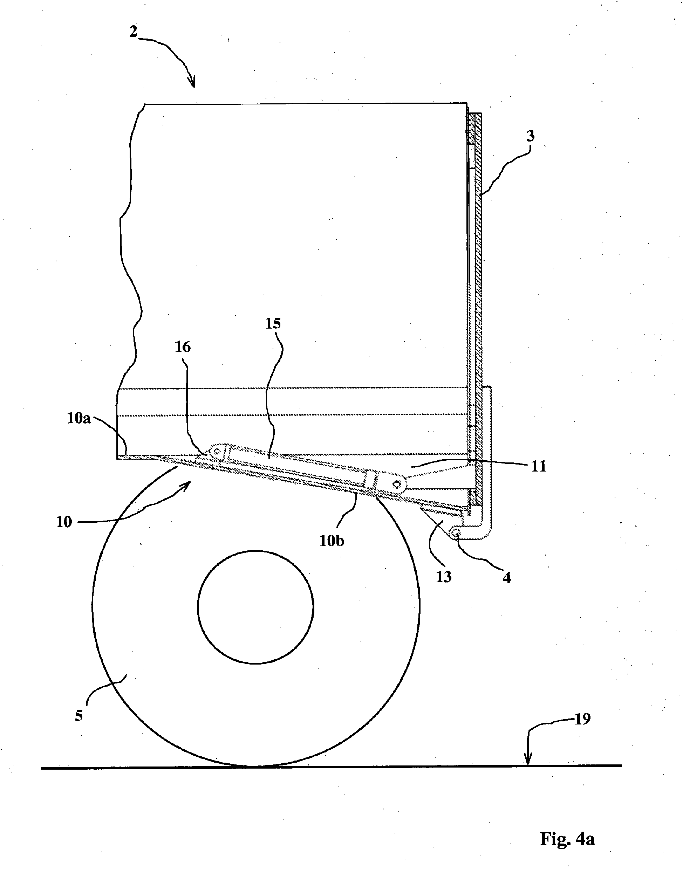

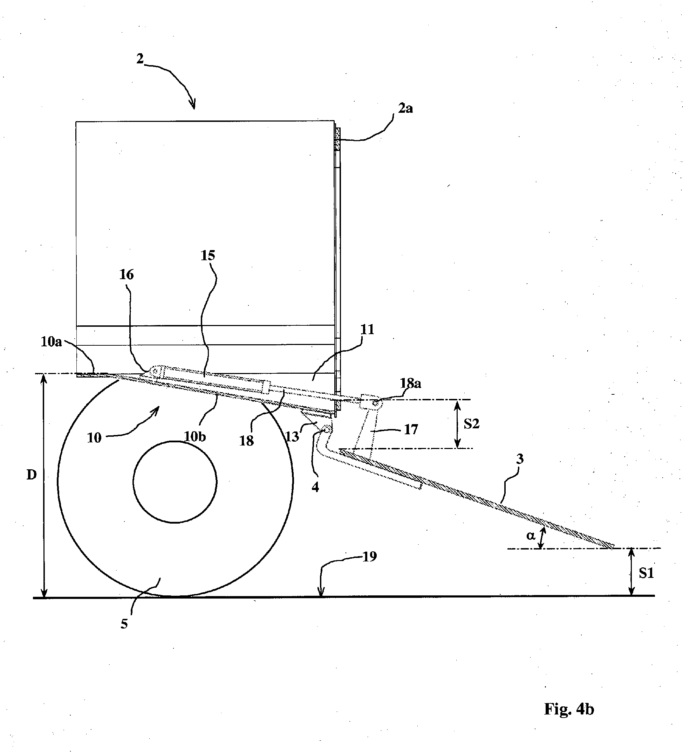

L'ouvrant 3 est déplacé de sa position fermée (Figure 4a) à sa position ouverte (Figure 4b) à l'aide de moyens de manoeuvre 15 comprenant deux actionneurs qui sont ici constitués par deux vérins hydrauliques (un seul vérin est visible aux Figures 4a et 4b).

Ces vérins sont positionnés dans la caisse 2 du véhicule dans des compartiments 11 situés de part et d'autre de la plaque inférieure 10 (voir Figure 3).

Chaque corps de vérin 15 est articulé sur la plaque inférieure 10 au niveau d'une patte 16. L'extrémité 18a de la tige 18 de chaque vérin 15 est articulée sur un bras 17 solidaire de l'ouvrant 3.

Les vérins 15 sont alimentés en fluide par le groupe hydraulique du véhicule 1.

La Figure 4b montre le véhicule 1 avec le panneau basculant 3 (ou ouvrant) ouvert et posé sur un sol horizontal et plan.

On remarque sur cette Figure que, malgré une distance D entre la partie horizontale 10a de la plaque 10 et le sol 19 qui est importante (de l'ordre de 1,2 m), l'angle α de la rampe formée par le panneau 3 est réduit (de l'ordre de 15°). Il subsiste un premier seuil S1 entre le sol 19 et la rampe 3 et un deuxième seuil S2 entre la rampe 3 et l'ouverture dans la paroi arrière 2a (c'est à dire pratiquement entre la rampe 3 et la plaque inférieure 10). Ces seuils sont réduits (inférieurs à 300 mm) et ne gênent pas la montée dans le véhicule 1. Le panneau 3 se trouve ainsi prolongé à l'intérieur du véhicule par la partie inclinée 10b de la plaque inférieure 10, ce qui facilite l'accès à l'habitacle.

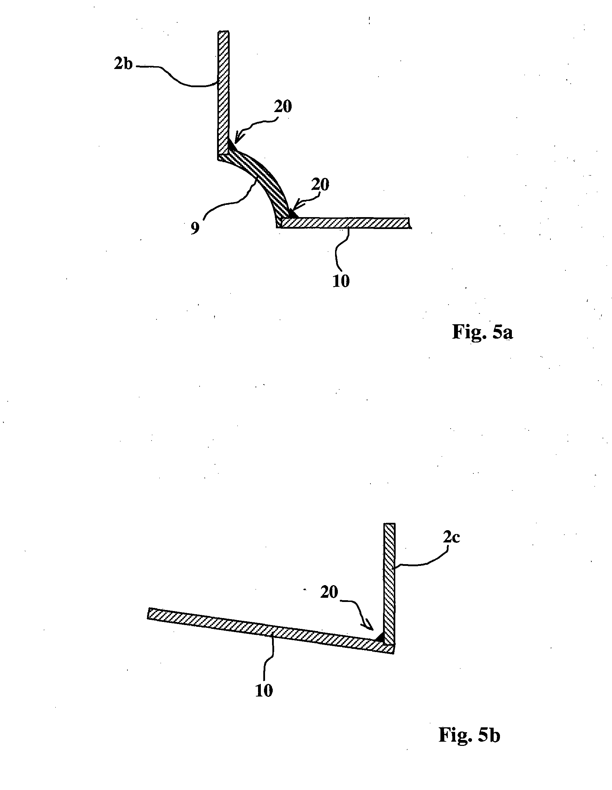

La Figure 5a montre de façon agrandie une coupe transversale de la caisse 2 au niveau du contact entre la plaque inférieure 10 inclinée et une des parois latérales concaves 9. On remarque que la paroi latérale 9 de la caisse 2 est en appui balistique contre la plaque inférieure 10.

Les appuis balistiques seront de préférence réalisés sous la forme de concordance de formes entre la plaque inférieure 10 et la paroi latérale 9, par exemple avec des créneaux et des languettes. Une telle solution est décrite dans le brevet FR2927990. Cet assemblage permet de fournir un point d'appui mutuel de la plaque inférieure par rapport à la paroi latérale lorsqu'un effort mécanique externe est appliqué à l'une ou l'autre de ces parties.

On remarque aussi qu'un assemblage analogue est réalisé entre la paroi verticale 2b de la caisse 2 et la paroi latérale concave 9. Des cordons de soudure 20 sont réalisés pour compléter la solidarisation des différentes parois et plaques.

La Figure 5b montre de façon analogue une coupe longitudinale de la caisse 2 au niveau du contact entre la plaque inférieure inclinée 10 et la paroi arrière 2c de la caisse 2. Là encore la paroi arrière 2c de la caisse 2 est en appui balistique contre la plaque inférieure 10. Ces appuis balistiques seront aussi réalisés sous la forme de concordance de formes entre la plaque inférieure et la paroi arrière 2c et un cordon de soudure 20 complètera la liaison.

On voit donc que grâce à l'invention l'accès à l'intérieur de l'habitacle est facilité sans qu'il ne soit nécessaire d'abaisser tout le plancher interne au véhicule.

La seule partie qui se trouve abaissée est la plaque inférieure 10, mais elle est abaissée progressivement au niveau de la partie inclinée 10b, sa partie la plus basse se trouvant sensiblement à la verticale de la paroi arrière 2a. Par ailleurs cette plaque inférieure est fixée aux différentes parois de la caisse à l'aide d'appuis balistiques qui assurent sa tenue mécanique aux effets des souffles des mines et engins explosifs.

La protection du plancher 10 est donc maintenue ainsi que celle des moyens de manoeuvre 15 du panneau basculant 3 qui se trouvent à l'abri dans le logement 11. La plaque inférieure 10 a par ailleurs un profil incliné facilitant la déviation du souffle d'un engin explosif.

## Revendications

1. Véhicule blindé (1) comportant une caisse (2) formant habitacle qui est obturée à sa partie arrière par un panneau basculant (3) constituant un ouvrant qui est articulé par rapport à la caisse (2) sur un pivot (4,13) et qui forme en position ouverte une rampe d'accès à l'habitacle, véhicule blindé ***caractérisé en ce* que** la caisse (2) comporte une plaque inférieure (10) qui comporte une partie (10b) qui s'incline progressivement vers l'arrière de la caisse (2), le pivot (4,13) de l'ouvrant (3) étant situé en dessous de cette plaque inférieure (10) et des moyens de manoeuvre (15) de l'ouvrant (3) se logeant latéralement au dessus de la plaque inférieure (10), la caisse comportant par ailleurs des parois latérales (9) sur lesquelles la plaque inférieure (10) est en appui balistique, et **en ce que**, en position ouverte avec le véhicule sur un sol horizontal plan, l'ouvrant (3) a une première extrémité qui est séparée du sol par un premier seuil (S1) et une deuxième extrémité qui est séparée de la plaque inférieure (10) par un deuxième seuil (S2).

2. Véhicule blindé selon la revendication 1, **caractérisé en ce que** les parois latérales (9) sur lesquelles la plaque inférieure (10) est en appui balistique sont des tôles pliées formant des déports coiffant des roues arrières du véhicule.

3. Véhicule blindé selon une des revendications 1 ou 2, **caractérisé en ce que** les moyens de manoeuvre (15) de l'ouvrant (3) sont logés dans des compartiments (11) de l'habitacle situés de part et d'autre de la plaque inférieure (10).

## Patentansprüche

1. Gepanzertes Fahrzeug (1), das eine ein Fahrzeuggehäuse bildende Karosserie (2) aufweist, die an ihrem hinteren Abschnitt mit einer schwenkbaren Platte (3) verschlossen ist, die ein zu öffnendes Element darstellt, das bezogen auf die Karosserie (2) an einem Drehgelenk (4, 13) angelenkt ist und in einer offenen Stellung eine Zugangsrampe zum Fahrzeuggehäuse bildet, wobei das gepanzerte Fahrzeug **dadurch gekennzeichnet ist, dass** die Karosserie (2) eine untere Platte (10) aufweist, die einen Abschnitt (10b) aufweist, der sich schrittweise in Richtung des hinteren Teils der Karosserie (2) neigt, wobei sich das Drehgelenk (4, 13) des zu öffnenden Elements (3) unter dieser unteren Platte (10) befindet und Betätigungsmittel (15) für das zu öffnende Element (3) seitlich über der unteren Platte (10) untergebracht sind, die Karosserie darüber hinaus Seitenwände (9) aufweist, an denen die untere Platte (10) ballistisch anliegt, und dadurch, dass das zu öffnende Element (3) in einer offenen Stellung mit dem Fahrzeug auf einem ebenen waagerechten Boden ein erstes Ende aufweist, das über eine erste Schwelle (S1) von dem Boden getrennt ist, und ein zweites Ende, das über eine zweite Schwelle (S2) von der unteren Platte (10) getrennt ist.

2. Gepanzertes Fahrzeug nach Anspruch 1, **dadurch gekennzeichnet, dass** die Seitenwände (9), an denen die untere Platte (10) ballistisch anliegt, gebogene Bleche sind, die Verbreiterungen bilden, die die Hinterräder des Fahrzeugs überdecken.

3. Gepanzertes Fahrzeug nach Anspruch 1 oder 2, **dadurch gekennzeichnet, dass** die Betätigungsmittel (15) für das zu öffnende Element (3) in Kammern (11) des Fahrzeuggehäuses untergebracht sind, die sich auf beiden Seiten der unteren Platte (10) befinden.

## Claims

1. An armoured vehicle (1) comprising a body shell (2) forming a cab interior which is closed at its rear part by a pivoting panel (3) constituting a door which is hinged with respect to the body shell (2) on a pivot (4, 13) and forms, in the open position, a ramp for accessing to the cab interior, the armoured vehicle being **characterized in that** the body shell (2) comprises a lower plate (10) which comprises a part (10b) which is gradually tilted to the rear of the body shell (2), the pivot (4, 13) of the door (3) being arranged below said lower plate (10) and means (15) for operating the door (3) being laterally housed above the lower plate (10), the body shell further comprising sidewalls (9) on which the lower plate (10) is supported in a ballistic manner, and **in that** the door (3), in the open position with the vehicle on a flat horizontal ground, has a first end separated from the ground by a first threshold (S1) and a second end separated from the lower plate (10) by a second threshold (S2).

2. The armoured vehicle according to claim 1, **characterized in that** the sidewalls (9), on which the lower plate (10) is supported in a ballistic manner, are bent plates forming offsets covering the rear wheels of the vehicle.

3. The armoured vehicle according to one of claims 1 or 2, **characterized in that** the means (15) for operating the door (3) are housed in compartments (11) of the cab interior situated on either side of the lower plate (10).
